(19) **Europäisches Patentamt / European Patent Office / Office européen des brevets**

(11) **EP 1 676 446 B1**

(12) **EUROPEAN PATENT SPECIFICATION**

(45) Date of publication and mention
of the grant of the patent:
**20.04.2011 Bulletin 2011/16**

(51) Int Cl.:
*H04N 7/26* (2006.01)

(21) Application number: **04784572.2**

(86) International application number:
**PCT/US2004/030745**

(22) Date of filing: **21.09.2004**

(87) International publication number:
**WO 2005/032142 (07.04.2005 Gazette 2005/14)**

(54) **VIDEO COMFORT NOISE ADDITION TECHNIQUE**

VIDEO-KOMFORTGERÄUSCH-ZUSATZTECHNIK

TECHNIQUE D'ADDITION DE BRUIT DE CONFORT VIDEO

(84) Designated Contracting States:
**DE ES FR GB IT**

(30) Priority: **23.09.2003 US 505254 P**

(43) Date of publication of application:
**05.07.2006 Bulletin 2006/27**

(73) Proprietor: **Thomson Licensing
92130 Issy-les-Moulineaux (FR)**

(72) Inventors:
- **TOURAPIS, Alexandros, Michael
West Windsor, New Jersey 08550 (US)**
- **BOYCE, Jill, MacDonald
Manalapan, New Jersey 07726 (US)**
- **LLACH, Joan
Princeton, New Jersey 08540 (US)**

(74) Representative: **Rumpler, Wolfgang et al
Hofstetter, Schurack & Skora,
Patentanwälte,
Balanstrasse 57
81541 München (DE)**

(56) References cited:
**US-A- 5 450 098**

- **CHRISTINA GOMILA, ALEXANDER KOBILANSKY: "SEI message for film grain encoding" JVT OF ISO IEC MPEG AND ITU-T VCEG JVT-H022, 23 May 2003 (2003-05-23), pages 1-14, XP002308742 GENEVA, SWITZERLAND**
- **CHRISTINA GOMILA: "SEI message for film grain encoding: syntax and results" JVT OF ISO IEC MPEG AND ITU-T VCEG JVT-I013 REVISION 2, 2 September 2003 (2003-09-02), pages 1-11, XP002308743 SAN DIEGO, CA, USA**
- **SCHOYER M K N ET AL: "Block position dithering in DCT-coded sequences" SIGNAL PROCESSING. IMAGE COMMUNICATION, ELSEVIER SCIENCE PUBLISHERS, AMSTERDAM, NL, vol. 8, no. 6, September 1996 (1996-09), pages 545-549, XP004047116 ISSN: 0923-5965**
- **GREG CONKLIN, NEELESH GOKHALE: "Dithering 5-tap Filter for Inloop Deblocking" JVT OF ISO IEC MPEG AND ITU-T VCEG JVT-C056, 6 May 2002 (2002-05-06), pages 21-16, XP002308744 FAIRFAX, VIRGINIA, USA**
- **CRISTINA GOMILA, JILL BOYCE: "Simplification of the JVT deblocking filter" JVT OF ISO IEC MPEG AND ITU-T VCEG JVT-C130, 6 May 2002 (2002-05-06), pages 1-16, XP002308745 FAIRFAX, VIRGINIA, USA**

**Description**

CROSS-REFERENCE TO RELATED APPLICATIONS

This application claims priority under 35 U.S.C. 119(e) to U.S. Provisional Patent Application Serial No. 60/505,254 filed on September 23, 2003.

TECHNICAL FIELD

This invention relates to a technique for reducing artifacts in connection with decoding of a coded video stream.

BACKGROUND ART

The decoding of a video stream compressed at low bit rate often yields visible artifacts noticeable to a viewer. Blockiness and structured noise patterns are common artifacts that arise when using block-based compression techniques. The human visual system has a greater sensitivity to certain types of artifacts, and thus, such artifacts appear more noticeable and objectionable than others. The addition of random noise to the decoded stream can reduce the noticeability of such compression artifacts, but large frame-to-frame differences created by adding random noise can itself produce artifacts that appear noticeable and objectionable.

The addition of a dither signal can reduce human sensitivity to image artifacts, for example to hide contouring and blocking artifacts. One prior art technique has proposed adding a random noise dither that is based on film grain to an image to disguise block effects. The rationale for adding such random noise is that random error is more forgiving than the structure, or correlated error. Other prior art techniques have proposed adding a dither signal to a video stream to hide compression artifacts. One past technique has proposed adding a random noise dither in the video encoding and decoding process in the in loop deblocking filter for the ITU/ISO H. 264 video coding standard, commonly known as the JVT coding standard. The amount of dither to be added depends on the position of a pixel with respect to a block edge. Another prior technique has proposed adding that random noise subsequent to video decoding (i.e., adding noise as a "post process"), for use as comfort noise. The amount of noise added depends on the quantization parameter and on the amount of noise added to spatially neighboring pixels. The term "comfort noise" comes from the use of noise in audio compression to indicate noise pattern generated at the receiver end to avoid total silence that is uncomfortable to a listener.

Details on prior techniques in which random noise is added subsequent to video decoding can be gathered from the following two articles:

Christina Gomila, Alexander Kobilansky: "SEI message for film grain encoding" JVT of ISO IEC MPEG and ITU-T VCEG JVT-H022, 23 May 2003 (2003-05-23), pages 1-14, XP002308742 Geneva, Switzerland.

Christina Gomila: "SEI message for film grain encoding: syntax and results" JVT of ISO IEC MPEG and ITU-T VCEG JVT-I013 Revision 2, 2 September 2003 (2003-09-02), pages 1-11, XP002308743 San Diego, CA, USA.

Past techniques for reducing artifacts by adding noise typically reduce spatial artifacts at the risk of creating temporal abnormalities, i.e., large frame-to-frame differences. Thus, there exists a need for a technique for reducing artifacts during decoding of a coded video stream that overcomes the aforementioned disadvantages.

BRIEF SUMMARY OF THE INVENTION

Briefly, in accordance with a preferred embodiment of the present principles, a method is provided for reduced artifacts in a video stream during decoding. The method commences by decoding the video stream. Following decoding, noise is added to the video stream by adding noise to each pixel in an amount correlated to luminance of at least a portion of a previously decoded picture. Thus, in accordance with the present principles, luminance correlation aids in determining the additive noise to reduce large frame-to-frame differences, a disadvantage of prior noise additive techniques. The noise is added by using a factor dependent on the temporal correlation of the current picture image with one of a previously displayed or decoded picture.

BRIEF DESCRIPTION OF THE DRAWINGS

FIGURE 1 depicts a block schematic diagram of a first embodiment of a video decoder arrangement in accordance with the present principles for reducing artifacts in connection with decoding a coded video stream by adding noise correlated to the luminance of at least a portion of the current picture;

FIGURE 2 depicts a block schematic diagram of a second embodiment of a video decoder arrangement in accordance with the present principles for reducing artifacts in connection with decoding a coded video stream by adding noise correlated to the luminance of at least a portion of the current picture; and

FIGURE 3 depicts a block schematic diagram of a third embodiment of a video decoder arrangement in accordance with the present principles for reducing artifacts in connection with decoding a coded video stream by adding noise correlated to the luminance of at least a portion of the current picture.

DETAILED DESCRIPTION

In accordance with the present principles, adding a random-noise, containing dither signal, to already decoded signal, in an amount correlated to the luminance of at least a portion of a current picture, improves the subjective video quality.

Heretofore, adding noise to a decoded signal has been found to improve the quality of the video signal. The visual impact of adding a noise signal to the video sequence, rather than just to a single image, becomes a consideration in the determination of the magnitude of the noise signal. Consideration has been given to the visual impact of adding a noise signal to the video sequence, rather than just to a single image in the determination of the magnitude of the noise signal. The magnitude of additive noise signal for a pixel in a picture can be correlated to the value of the additive noise signal of the pixels in the previously displayed picture, e.g., the noise signals are temporally correlated. Alternatively, the temporal correlation can be based on the previously decoded picture, rather than the previously displayed picture.

Based on the foregoing, the added noise signal, using temporal correlation with a correlation factor $\alpha$, $0 \leq \alpha \leq 1$, can be computed as

$$N(k, x, y) = (1 - \alpha) * N(k\text{-}1, x, y) + \alpha * R(k, x, y) \tag{1}$$

The random number $R(k, x, y)$ can be generated using any type of random number distribution, for example a Normalized, Gaussian, or Laplacian distribution. $R(k, x, y)$ may also be clipped within a certain range if necessary. The random number generator may be implemented by means of a lookup table. $R(k, x, y)$ may also include spatial correlation, such as that used for example in film grain noise generation.

In accordance with present principles, noise addition appears quite dependent on the brightness (i.e., luminance) of a block or macroblock, but also to that of its adjacent blocks. The darker the block/macroblock, the easier it becomes to notice noise with relatively high variance. On this basis, the amount of additive noise $N(k, x, y)$ can be given by the relationship:

$$N(k, x, y) = (1 - \gamma(k, x, y)) * N(k\text{-}1, x, y) + \gamma(k, x, y) * (1 - \phi(k, x, y)) * R(k, x, y) \tag{2}$$

with the function $\gamma(k, x, y)$ representing a correlation factor dependent on the temporal correlation of the current image with the previous displayed or decoded one.

The term $\gamma(k, x, y)$ can be computed as :

$$\gamma(k, x, y) = \alpha - \beta * f_1(D(k, x, y), D(k\text{-}1, x, y)), \qquad 0 \leq \beta \leq \alpha \leq 1 \tag{3}$$

where $f_1()$ takes values between 0 and 1 and computes the temporal correlation factor of pixel $(x, y)$ in picture k with its co-located pixel in picture k-1. The Factors $\alpha$ and $\beta$ here relate to the picture type (I, P or B picture) as well as the quantizer used for coding the current picture or block, and can be calculated through the use of a lookup table. Alternatively, the full resolution difference image between pictures k and k-1, can be used and the two pictures may be considered as correlated (i.e. $f_1 = 1$) if the total absolute difference is below a value.

It is also possible to consider simpler metrics. For example considerable savings in storage and computation can occur by considering the mean of N x N blocks instead and perform noise adaptation at a block level. In this case,

the term $f_1$ (D(k, x, y), D(k -1, x, y)) will equal:

$$f_1\big(\mathrm{D}(k, x, y), \mathrm{D}(k \text{-} 1, x, y)\big) = \left(\frac{1}{N \times N} abs\left(\sum_{k=0}^{N}\sum_{m=0}^{N} D(k, x+k, y+k)\right.\right.$$
$$\left.\left. - \sum_{k=0}^{N}\sum_{m=0}^{N} D(k-1, x+k, y+k)\right) > \zeta_0 \, ?0:1\right) \qquad (4)$$

where $0 \le \zeta_0 \le 255$.

The Term $\phi$(k, x, y) reflects spatial information to adjust the strength of the noise that will be used. In particular $\phi$(k, x, y) can be computed as:

$$\phi(\mathrm{k, x, y}) = f_2(\mathrm{D(k, x, y)})$$
$$+ f_3(\mathrm{D(k, x\text{-}}bsx\mathrm{, y),\ D(k, x+}bsx\mathrm{, y), D(k, x, y\text{-}}bsy\mathrm{)\ , D(k, x, y+}bsy\mathrm{)}) \qquad (4)$$

where $f_2()$ relates to the brightness of the current pixel or the N x N block to which it belongs while $f_3()$ computes the spatial relationship between the current pixel/block with it's horizontally or vertically adjacent at a distance of *bsx* or *bsy*. For example,

$$f_2(\mathrm{D(k, x, y)}) = \left(\frac{1}{N \times N}\sum_{k=0}^{N}\sum_{m=0}^{N} D(k, x+k, y+k) > \zeta_1 \, ?0:1\right) \qquad (5)$$

$$f_3(\mathrm{D(k, x, y)}) = (f_2(\mathrm{D(k, x, y)}) - f_2(\mathrm{D(k, x+N, y)}) == \zeta_2) \, \| \, (f_2(\mathrm{D(k, x, y)}) - f_2(\mathrm{D(k, x\text{-}N, y)}) == \zeta_3)$$
$$\| \, (f_2(\mathrm{D(k, x, y)}) - f_2(\mathrm{D(k, x, y+N)}) == \zeta_4) \, \| \, (f_2(\mathrm{D(k, x, y)}) - f_2(\mathrm{D(k, x, y\text{-}N)}) == \zeta_5) \qquad (6)$$

where $0 \le \zeta_1 \le 255$, and $-255 \le \zeta_2, \zeta_3, \zeta_4, \zeta_5 \le 255$.

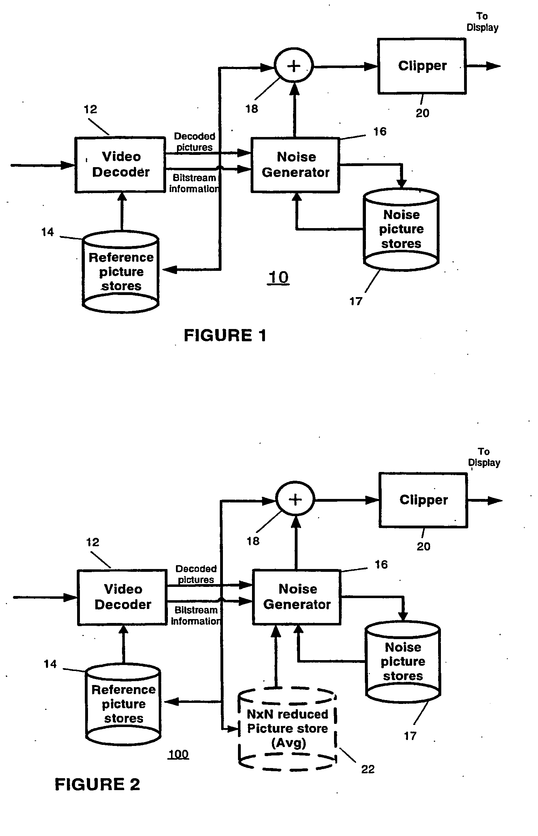

FIGURE 1 depicts a block schematic diagram of a first embodiment of a video decoder arrangement 10 for adding noise correlated to the luminance of at least a portion of the current picture in a manner compatible with Equation 2 to reduce artifacts. The decoder arrangement 10 includes a decoder 12 for decoding an incoming coded video stream. The design of decoder 12 depends on the compression format employed to code the incoming video stream. In a preferred embodiment, the incoming video stream undergoes compression using the well-known ITU/ISO H. 264 standard. Under such circumstances, the decoder 12 takes the form of a H.264 decoder known in the art. A reference picture store 14 stores pictures decoded by the decoder 12 for use by the decoder in decoding future pictures.

The decoder 12 supplies a noise generator 16 with both a decoded picture, as well as bit stream information contained in the decoded picture. The bit stream information output by the decoder 12 can include a quantization parameter input to the noise generator. The severity of compression artifacts is correlated to the quantization parameter, with more severe compression artifacts occurring when high quantization parameter values are used. The strength of the added comfort noise can be increased as the quantization parameter value increases.

A summing block 18 sums each decoded picture from the decoder 12 with noise from a noise generator 16. A clipper 20 then clips the resultant signal output by the summing block 18 to yield a decoded picture for display which exhibits reduced artifacts. Note that noise addition occurs after storage of decoded pictures in the reference picture store 14 since the reference pictures must remain unchanged in order to properly decode the subsequent incoming pictures.

A noise picture store 17 stores the noise signal N(k, x, y) for the $k^{th}$ picture for subsequent use by the noise generator 16. The noise generator 16 responds to reference pictures stored in the reference picture 14 store, which contains information about previously decoded pictures. Although not necessary, an additional storage could be added if block based computation for the temporal correlation between decoded pictures is used.

While noise generation for each pixel within an image remains possible, in certain cases (i.e. for higher resolution material), generation of larger size (grain) noise often proves more desirable. For example, applying an N x N block size Discrete Cosine Transform on the noise image, and then discarding the resultant higher frequencies will yield a larger size noise similar to film grain noise. This process nevertheless incurs a relatively large expense and typically will require a deblocking process in order to reduce blocking artifacts that might be generated on the block edges.

FIGURE 2 depicts a block schematic diagram of a second embodiment of a video decoder arrangement 100 for adding large grain noise correlated to the luminance of at least a portion of the current picture. The decoder arrangement 100 includes many of the same elements as the decoder arrangement 10 of FIG. 1, and like reference numbers identify like elements. As compared to the decoder arrangement 10 of FIG. 1, the decoder arrangement 100 of FIG. 2 further includes a N x N reduced picture average store 22 coupled to the reference picture store 14. The picture store 22 typically stores N x N luma block average values. The average luma values stored in the picture store 22 allow the decoder arrangement to generate larger grain noise as discussed.

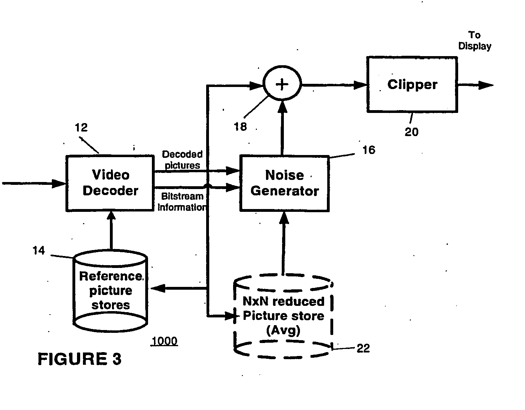

FIGURE 3 depicts a block schematic diagram of a third embodiment of a video decoder arrangement 1000 for adding large grain noise correlated to the luminance of at least a portion of the current picture. The decoder arrangement 1000 of FIG. 3 includes many of the same elements as the decoder arrangement 100 of FIG. 2, and like reference numbers identify like elements. As compared to the decoder arrangement 100 of FIG. 2, the decoder arrangement 1000 of FIG. 3 contains no noise picture store 17, but only the N x N reduced picture average store 22.

An alternative and considerably simpler process would be to generate the noise at a smaller resolution than that of the original image (e.g. half horizontal and vertical resolution), and then up sample the noise (e.g. using sample replication). Using the original or smaller resolution could also be decided based on the resolution of the original pictures (e.g. use same resolution for Standard Definition and lower definition material, while using lower resolution noise generation for High Definition material). Side parameters could also be transmitted with the bit stream that would allow the decoder to decide which process shall be used. Side information could also be used for the generation of noise (e.g. noise variance weighting).

This exact same process could also be applied onto color components as well. Nevertheless, to reduce complexity and computation, noise generation could occur based only on one luminance component (i.e. luma), and while re-using the same noise on all color components, after performing a simple scaling and sub-sampling if necessary. For example, for 4:2:0 material, the luma noise is vertically and horizontally sub-sampled by 2, and can be divided by 2 in order to generate chroma noise.

The decoder arrangement 10 and 100 of FIGS. 1 and 2 represent instantiations of a temporal Infinite Impulse Response (IIR) filter. The IIR filter may be generalized by using more filter taps. IIR filters can also generally be approximated using higher order FIR filters, using as many taps, t, as desired in accordance with the following relationship:

$$N(k,x,y) = \prod_{j=0}^{t-1}(1 - \gamma(k-j,x,y)) \times N(k-t,x,y)$$
$$+ \sum_{i=0}^{t-1}\left( \prod_{j=0}^{i-1}(1 - \gamma(k-j,x,y)) \times \gamma(k-i,x,y) \times (1 - \phi(k-i,x,y)) \times R(k-i,x,y) \right) \quad (7)$$

A Finite Impulse Response (FIR) filter approach can be implemented using the decoder arrangement of FIGURE 3. The decoder arrangement 1000 only makes use of the previous random numbers R, and if necessary, the N x N luma block mean values, rather than the previous noise N, in such an FIR filter approach, thus reducing memory bandwidth. It is possible also to use and store only the N x N luma block average values of the current and previous picture, and reuse the same values and their difference for all taps. For example we may use the following system:

$$N(k,x,y) = (1 - \gamma(k,x,y)) \times (1 - \gamma(k-1,x,y)) \times R(k-2,x,y)$$
$$+ (1 - \gamma(k,x,y)) \times \gamma(k-1,x,y) \times (1 - \phi(k-1,x,y)) \times R(k-1,x,y) \quad (8)$$
$$+ \gamma(k,x,y) \times (1 - \phi(k,x,y)) \times R(k,x,y)$$

although it is further possible to simplify the above by forcing the difference images used in the computation of $\gamma(k\text{-}1, x, y)$ to be the same as that of $\gamma(k,x,y)$. This would completely avoid the need to store or re-compute the difference image, and considerably reduce memory bandwidth.

The foregoing describes a technique for reducing artifacts in connection with decoding of a coded video stream by adding noise correlated to the luminance of at least a portion of the current picture.

**Claims**

1. A method for reducing artifacts in a video stream, comprising the step of:

decoding the video stream;
adding random noise to at least one pixel in a picture in the video stream following decoding in an amount correlated to luminance information of at least a portion of a current picture **characterized by** : correlating the noise using a factor dependent on the temporal correlation of the current picture image with one of a previously displayed or decoded picture.

2. The method according to claim 1 wherein the correlation factor is established in accordance with one of a luma or color component.

3. The method according to claim 1 further comprising the step of adding noise to a color component of the picture in accordance with a luma component.

4. The method according to claim 1 wherein the correlation factor is first established on an N x N pixel picture block basis, where N is an integer, prior to interpolation of the additive noise.

5. The method according to claim 1 further comprising the step of adjusting the noise based on the intensity of an N x N block, where N is an integer, of adjacent pixels.

6. The method according to claim 1 wherein the amount of noise is correlated using an approximation of a Finite Impulse Response (FIR) filter.

7. A decoder arrangement for decoding a coded video stream to yield reduced artifacts, comprising:

a video decoder (12) for decoding an incoming coded video stream to yield decoded pictures;
a reference picture store (14) for storing at least one previously decoded picture for use by the decoder in decoding future pictures,
a noise generator (16) for generating random noise for addition to at least one pixel in a decoded picture in an amount correlated to luminance information of at least a portion of a current picture **characterized by** : correlating the noise using a factor dependent on the temporal correlation of the current picture image with one of a previously displayed or decoded picture:
a noise picture store (17) for storing the noise information for subsequent use by the noise generator.
a summing block for summing the noise generated by the noise generator with a decoded picture from the decoder; and
a clipper (20) for clipping the summed noise and decoded picture.

8. The decoder arrangement according to claim 7 wherein the noise generator implements an instantiation of a Finite Impulse Response filter.

9. The decoder arrangement according to claim 7 wherein the noise generator implements an approximation of an Infinite Impulse Response filter.

10. The decoder arrangement according to claim 7 wherein the noise generator generates noise in accordance with decoded pictures and bit stream information supplied from the decoder.

11. The decoder arrangement according to claim 7 wherein the bit stream information comprises a quantization parameter.

12. The decoder arrangement according to claim 7 further including a second picture store for storing an N x N pixel block picture average, where N is an integer, for use by the noise generator.

13. A decoder arrangement for decoding a coded video stream to yield reduced artifacts, comprising:

a video decoder (12) for decoding an incoming coded video stream to yield decoded pictures;
a reference picture store (14) for at least one storing at least on previously decoded picture for use by the decoder in decoding future pictures,
a noise generator (16) for generating noise in accordance with decoded pictures and bit stream information from the decoder for addition to at least one pixel in the decoded picture in an amount correlated to additive noise of at least one pixel in a prior picture **characterized by :** correlating the noise using a factor dependent on the temporal correlation of the current picture image with one of a previously displayed or decoded picture; a picture store (22) for storing an N x N pixel block picture average, where N is an integer, for use by the noise generator; and
a summing block (18) for summing the noise generated by the noise generator with a decoded picture from the decoder.

**14.** The decoder arrangement according to claim 13 wherein the noise generator implements an instantiation of a Finite Impulse Response filter.

**Patentansprüche**

**1.** Verfahren zum Verringern von Artefakten in einem Videostrom, wobei das Verfahren den folgenden Schritt umfasst:

Decodieren des Videostroms;
Hinzufügen von weißem Rauschen zu mindestens einem Pixel in einem Bild in dem Videostrom nach dem Decodieren in einer Menge, die mit Farbdichteinformationen mindestens eines Abschnitts eines gegenwärtigen Bilds korreliert ist, **gekennzeichnet durch**: Korrelieren des Rauschens unter Verwendung eines Faktors, der von der zeitlichen Korrelation des gegenwärtigen Bilds mit einem zuvor angezeigten oder decodierten Bild abhängt.

**2.** Verfahren nach Anspruch 1, bei dem der Korrelationsfaktor in Übereinstimmung mit einer Luma- oder Farbkomponente festgesetzt wird.

**3.** Verfahren nach Anspruch 1, das ferner den Schritt des Hinzufügens von Rauschen zu einer Farbkomponente des Bilds in Übereinstimmung mit einer Luma-Komponente umfasst.

**4.** Verfahren nach Anspruch 1, bei dem der Korrelationsfaktor vor der Interpolation des additiven Rauschens zunächst auf einer N x N-Pixelbildblock-Grundlage, wobei N eine ganze Zahl ist, festgesetzt wird.

**5.** Verfahren nach Anspruch 1, das ferner den Schritt des Einstellens des Rauschens auf der Grundlage der Intensität eines N x N-Blocks, wobei N eine ganze Zahl ist, angrenzender Pixel umfasst.

**6.** Verfahren nach Anspruch 1, bei dem die Menge des Rauschens unter Verwendung einer Näherung eines Filters mit begrenztem Ansprechen auf einen Impuls (FIR-Filters) korreliert wird.

**7.** Decoderanordnung zum Decodieren eines codierten Videostroms zum Liefern verringerter Artefakte, wobei die Decoderanordnung umfasst:

einen Videodecoder (12) zum Decodieren eines ankommenden codierten Videostroms zum Liefern decodierter Bilder;
einen Referenzbildspeicher (14) zum Speichern mindestens eines zuvor decodierten Bilds zur Verwendung durch den Decoder beim Decodieren künftiger Bilder,
einen Rauschgenerator (16) zum Erzeugen von weißem Rauschen zur Zugabe zu mindestens einem Pixel in einem decodierten Bild in einer Menge, die mit Farbdichteinformationen mindestens eines Abschnitts eines gegenwärtigen Bilds korreliert ist, **gekennzeichnet durch**: Korrelieren des Rauschens unter Verwendung eines Faktors, der von der zeitlichen Korrelation des gegenwärtigen Bilds mit einem zuvor angezeigten oder decodierten Bild abhängt:

einen Rauschbildspeicher (17) zum Speichern der Rauschinformationen zur nachfolgenden Verwendung **durch** den Rauschgenerator;
einen Summierblock zum Summieren des **durch** den Rauschgenerator erzeugten Rauschens mit einem decodierten Bild von dem Decoder; und
eine Begrenzerschaltung (20) zum Begrenzen des summierten Rauschens und decodierten Bilds.

**8.** Decoderanordnung nach Anspruch 7, bei der der Rauschgenerator eine Instanziierung eines Filters mit begrenztem Ansprechen auf einen Impuls implementiert.

**9.** Decoderanordnung nach Anspruch 7, bei der der Rauschgenerator eine Näherung eines Filters mit begrenztem Ansprechen auf einen Impuls implementiert.

**10.** Decoderanordnung nach Anspruch 7, bei der der Rauschgenerator Rauschen in Übereinstimmung mit decodierten Bildern und mit von dem Decoder zugeführten Bitstrominformationen erzeugt.

**11.** Decoderanordnung nach Anspruch 7, bei der die Bitstrominformationen einen Quantisierungsparameter umfassen.

**12.** Decoderanordnung nach Anspruch 7, die ferner einen zweiten Bildspeicher zum Speichern eines N x N-Pixelblockbild-Durchschnitts, wobei N eine ganze Zahl ist, zur Verwendung durch den Rauschgenerator enthält.

**13.** Decoderanordnung zum Decodieren eines codierten Videostroms zum Liefern verringerter Artefakte, wobei die Decoderanordnung umfasst:

einen Videodecoder (12) zum Decodieren eines ankommenden codierten Videostroms zum Liefern decodierter Bilder;
einen Referenzbildspeicher (14) zum Speichern mindestens eines zuvor decodierten Bilds zur Verwendung durch den Decoder beim Decodieren künftiger Bilder,
einen Rauschgenerator (16) zum Erzeugen von Rauschen in Übereinstimmung mit decodierten Bildern und mit Bitstrominformationen von dem Decoder zur Zugabe zu mindestens einem Pixel in dem decodierten Bild in einer Menge, die mit additivem Rauschen mindestens eines Pixels in einem früheren Bild korreliert ist, **gekennzeichnet durch**: Korrelieren des Rauschens unter Verwendung eines Faktors, der von der zeitlichen Korrelation des gegenwärtigen Bilds mit einem zuvor angezeigten oder decodierten Bild abhängt;
einen Bildspeicher (22) zum Speichern eines N x N-Pixelblockbild-Durchschnitts, wobei N eine ganze Zahl ist, zur Verwendung **durch** den Rauschgenerator; und
einen Summierblock (18) zum Summieren des **durch** den Rauschgenerator erzeugten Rauschens mit einem decodierten Bild von dem Decoder.

**14.** Decoderanordnung nach Anspruch 13, bei der der Rauschgenerator eine Instanziierung eines Filters mit begrenztem Ansprechen auf einen Impuls implementiert.

**Revendications**

**1.** Procédé de réduction des artefacts dans un flux de données vidéo, comprenant les étapes consistant à :

décoder le flux de données vidéo ;
ajouter du bruit aléatoire à au moins un pixel dans une image dans le flux de données vidéo suite au décodage en une quantité corrélée avec des informations de luminance d'au moins une portion d'une image actuelle, **caractérisé par** : la mise en corrélation du bruit en utilisant un facteur dépendant de la corrélation temporelle de l'image actuelle avec une image parmi une image précédemment affichée ou décodée.

**2.** Procédé selon la revendication 1, dans lequel le facteur de corrélation est établi conformément avec un composant parmi un composant de luma ou de couleur.

**3.** Procédé selon la revendication 1, comprenant en outre l'étape consistant à ajouter du bruit à un composant de couleur de l'image conformément à un composant de luma.

**4.** Procédé selon la revendication 1, dans lequel le facteur de corrélation est d'abord établi sur une base de bloc d'image à N x N pixels, où N est un entier, avant interpolation du bruit additif.

**5.** Procédé selon la revendication 1, comprenant en outre l'étape consistant à régler le bruit en fonction de l'intensité d'un bloc N x N, où N est un entier, de pixels adjacents.

**6.** Procédé selon la revendication 1, dans lequel la quantité de bruit est corrélée en utilisant une approximation d'un filtre non récursif (FIR).

**7.** Agencement de décodeur pour décoder un flux de données vidéo codé afin d'obtenir des artefacts réduits, comprenant :

un décodeur vidéo (12) pour décoder un flux de données vidéo codé entrant afin d'obtenir des images décodées ;
une mémoire d'images de référence (14) pour stocker au moins une image précédemment décodée destinée à être utilisé par le décodeur dans le décodage d'images futures ;
un générateur de bruit (16) pour générer du bruit aléatoire pour l'addition à au moins un pixel dans une image décodée en une quantité corrélée avec des informations de luminance d'au moins une portion d'une image actuelle, **caractérisé par** : la mise en corrélation du bruit en utilisant un facteur dépendant de la corrélation temporelle de l'image actuelle avec une image parmi une image précédemment affichée ou décodée ;
une mémoire d'images de bruit (17) pour stocker les informations de bruit pour l'utilisation subséquente par le générateur de bruit ;
un bloc de totalisation pour totaliser le bruit généré par le générateur de bruit avec une image décodée provenant du décodeur ; et
un écrêteur (20) pour écrêter le bruit totalisé et l'image décodée.

**8.** Agencement de décodeur selon la revendication 7, dans lequel le générateur de bruit met en oeuvre une instanciation d'un filtre non récursif (FIR).

**9.** Agencement de décodeur selon la revendication 7, dans lequel le générateur de bruit met en oeuvre une approximation d'un filtre non récursif (FIR).

**10.** Agencement de décodeur selon la revendication 7, dans lequel le générateur de bruit génère du bruit conformément à des images décodées et des informations de train de bits fournies par le décodeur.

**11.** Agencement de décodeur selon la revendication 7, dans lequel les informations de train de bits comprennent un paramètre de quantification.

**12.** Agencement de décodeur selon la revendication 7, incluant en outre une seconde mémoire d'images pour stocker une moyenne d'image à bloc de N x N pixels, où N est un entier, destinée à être utilisée par le générateur de bruit.

**13.** Agencement de décodeur pour décoder un flux de données vidéo codé afin d'obtenir des artefacts réduits, comprenant :

un décodeur vidéo (12) pour décoder un flux de données vidéo codé entrant afin d'obtenir des images décodées ;
une mémoire d'images de référence (14) pour stocker au moins une image précédemment décodée destinée à être utilisé par le décodeur dans le décodage d'images futures ;
un générateur de bruit (16) pour générer du bruit conformément à des images décodées et des informations de train de bits provenant du décodeur pour l'addition à au moins un pixel dans l'image décodée en une quantité corrélée avec du bruit additif d'au moins un pixel dans une image antérieure, **caractérisé par** : la mise en corrélation du bruit en utilisant un facteur dépendant de la corrélation temporelle de l'image actuelle avec une image parmi une image précédemment affichée ou décodée ;
une mémoire d'images (22) pour stocker une moyenne d'image à bloc de N x N pixels, où N est un entier, destinée à être utilisée par le générateur de bruit ; et
un bloc de totalisation (18) pour totaliser le bruit généré par le générateur de bruit avec une image décodée provenant du décodeur.

**14.** Agencement de décodeur selon la revendication 13, dans lequel le générateur de bruit met en oeuvre une instanciation d'un filtre non récursif (FIR).

To
Display

Clipper

20

12

Video
Decoder

Decoded
pictures

Noise
Generator

16

18

Bitstream
information

14

Reference
picture
stores

Noise
picture
stores

10

17

**FIGURE 1**

To
Display

Clipper

20

12

Video
Decoder

Decoded
pictures

Noise
Generator

16

18

Bitstream
information

14

Reference
picture
stores

Noise
picture
stores

NxN reduced
Picture store
(Avg)

100

17

22

**FIGURE 2**

**To Display**

**Clipper**

18

20

12

Decoded pictures

**Video Decoder**

**Noise Generator**

16

Bitstream Information

14

**Reference picture stores**

**NxN reduced Picture store (Avg)**

22

1000

**FIGURE 3**

## REFERENCES CITED IN THE DESCRIPTION

**Patent documents cited in the description**

- US 50525403 P

**Non-patent literature cited in the description**

- **Christina Gomila ; Alexander Kobilansky.** SEI message for film grain encoding. *JVT of ISO IEC MPEG and ITU-T VCEG JVT-H022,* 23 May 2003, 1-14

- **Christina Gomila.** SEI message for film grain encoding: syntax and results. *JVT of ISO IEC MPEG and ITU-T VCEG JVT-I013 Revision 2,* 02 September 2003, 1-11